Europäisches Patentamt

European Patent Office

Office européen des brevets

(19)

(11) Publication number: **0 004 758**
**B1**

# (12) EUROPEAN PATENT SPECIFICATION

(45) Date of publication of patent specification: **30.12.81**

(21) Application number: **79300532.3**

(22) Date of filing: **30.03.79**

(51) Int. Cl.³: **A 01 N 25/08,**
**A 01 N 47/24,**
**C 07 C 149/00**

(54) **Insecticidal compositions, and preparation and use thereof.**

(30) Priority: **31.03.78 US 892397**
**31.03.78 US 892396**

(43) Date of publication of application:
**17.10.79 Bulletin 79/21**

(45) Publication of the grant of the European patent:
**30.12.81 Bulletin 81/52**

(84) Designated Contracting States:
**DE FR GB IT**

(56) References cited:
**CA - A - 786 777**
**CH - A - 430 660**
**CH - A - 483 196**
**DE - A - 1 936 748**

(73) Proprietor: **E.I. DU PONT DE NEMOURS AND COMPANY**
**Legal Department 1007 Market Street**
**Wilmington, Delaware 19898 (US)**

(72) Inventor: **Tocker, Stanley**
**4656 Norwood Drive**
**Wilmington, Delaware 19803 (US)**

(74) Representative: **Hildyard, Edward Martin et al,**
**Frank B. Dehn & Co. Imperial House 15-19 Kingsway**
**London WC2B 6UZ (GB)**

### Insecticidal compositions, and preparation and use thereof

This invention relates to compositions of the insecticide methomyl and to the preparation and use of such compositions.

It has been recognized that particles of insecticide may be used effectively to control insects while simultaneously controlling the speed of release of the insecticide so as to minimize any undesirable effects. Traditionally, the particles are produced by processes which involved co-melting the pesticides with a barrier which may be a polymer. After the polymer and insecticide have been melted together, a grinding step takes place in which the particles are reduced to the desired size. This sort of technique is taught in Canadian Patent 51,153 to G. C. Allen, Coppedge et al., J. Economic Entymology 68, 508 (1976), and Canadian Patent 786,777.

Methomyl is an important insecticide with a wide variety of uses. It is known chemically as S-methyl N-(methylcarbamoyloxythioacetamide). Although it has widely been used on a variety of crops to kill insects, without causing any significant damage to the crops, the use of methomyl has been restricted with respect to cotton. In the past, although serving to control effectively the insects which affect cotton such as bollworms, budworms, cotton leaf perforater, beet armyworm and looper, the use of methomyl has resulted in phytotoxicity This evidenced by reddening of the cotton. Although methomyl has extremely high initial contact activity, residual activity decreases rapidly and little insecticidal action remains after two days.

In DOS 1,936,748 it is proposed to adsorb biologically active substances such as methomyl onto the surface of preformed polymer particles from a solution of the active ingredient or by dry compaction. The release of the active substance depends on adsorption — desorption interaction with the carrier surface. The proportion of active ingredient is quite low, generally not above 10% by weight.

Swiss Patent Specification No. 483,196 discloses carbamate insecticides and their compositions with a large variety of solid carriers, including various natural and synthetic resins. No compositions having controlled release properties are taught.

According to Canadian Patent Specification No. 786,777 insecticides such as methomyl are blended with an indene polymer or with a copolymer of indene with phenol and coumarone. These products are tacky under warm ambient conditions and the particles tend to agglomerate, causing serious problems in their application to crops.

Thus, there is a need for a means for producing methomyl in a form where insects will be destroyed without injuring a valuable crop, cotton. In addition, it would be desirable to preserve the high initial contact activity and increase the residual activity of the methomyl. Enhanced residual activity would be valuable for use on any crop, not only on cotton. The composition should be free-flowing to enable accurate application at the desired dose rate.

According to the instant invention, it has unexpectedly been found that methomyl impregnated in a polymer or mixtures of polymers can fulfill all of the above requirements. The composition of the invention is a free-flowing composition comprising 1—50% by weight of methomyl impregnated in 10—98% by weight of a water-insoluble polymer which is soluble in an organic solvent, has an inherent viscosity of at least 0.2 and is capable of releasing methomyl at a rate such that said composition exhibits an undiminished initial activity, an enhanced residual activity and reduced phytotoxic damage to cotton plants relative to solid methomyl. By "impregnated" is meant that the methomyl is dispersed homogeneously throughout the particles of polymer as a susbtantially molecular dispersion.

It should be emphasized that every polymer may not be used for this purpose; only certain polymers permit the passage of sufficient methomyl to have substantially undiminished initial insecticidal activity and enhanced residual activity while exhibiting reduced phytotoxic damage to a sensitive crop such as cotton. Typical of the polymers which may be utilized are poly(methylmethacrylate), poly(ethylmethacrylate), polystyrene and ethyl cellulose.

The polymer must be water-insoluble, have low permeability to water and be capable of dissolving in an organic solvent. The polymer utilized should also have an inherent viscosity of at least about .2 measured for 0.25 g polymer in 50 ml solvent at 20°C using a No. 50 Cannon & Fenske viscometer. The particles must also flow freely so they may be readily applied.

### DETAILED DESCRIPTION OF THE INVENTION

The polymers which may be utilized for the instant inventions should have an inherent viscosity of at least about 0.2 and on up to about 2.0. Preferably, at least about 0.4.

The polymers which are effective in the instant invention include the following: poly(methylmethacrylate), poly(ethylmethacrylate), methyl methacrylate copolymers with polar monomers, ethyl cellulose, cellulose acetate, cellulose acetatebutyrate, polystyrene, stvrene copolymers, poly(vinyl chloride), vinyl chloride-vinyl acetate copolymers and poly(vinyl acetate). There is no intent to limit the polymers to those named above.

The invention also includes particles consisting of more than one of the above polymers.

Inert particulate additives or diluents may be used in conjunction with particles in order to facilitate processing or adjusting the availability of methomyl from the controlled release matrix.

Preferred solid diluents include finely divided silicas, kaolinites, diatomites, montmorillonites, hydrous aluminosilicates, calcium carbonates, talcs, crushed brick, pyrophyllites, silicates, etc.

The diluent may be present in an amount up to about 50% by weight of the entire composition, preferably up to about 10%. The diluent should be present in an amount of at least about .1%, preferably at least about 2—3%.

Concerning the particles themselves, the polymer content should be about 10—98 weight %, preferably 30—95 weight %, and most preferably about 40—90 weight % of the particles. The methomyl content should be in the range of 1—50%, preferably 10—40%, and most preferably 15—35%.

The particles may be produced by any of the known methods for making particles with an active ingredient embedded therein, such as co-melting of a polymer and the insecticide followed by grinding the product to a desired particulate size. One method that is advantageous for methomyl is to dissolve the polymer and methomyl in a solvent such as methylene chloride. The solvent is then removed at atmospheric or reduced pressure in an air stream, preferably with some heating. This method permits use of some non-melting polymers or polymers that melt above about 100°C, the decomposition temperature of methomyl. In some cases, an intermediate gel phase may result which can readily be fragmented with slight pressure, reducing the amount of grinding required to obtain a product which is a sufficiently fine powder to be useful in the instant invention. Also, grinding can be facilitated by the use of low molecular weight polymers, or the use of additives that embrittle the polymer such as silica.

The polymer is then ground by conventional means such as an air mill so that substantially all of the particles are under 300 microns in their longest dimension (at least 90%).

Generally, it is much preferred that the ground sample be washed with water to remove any unembedded methomyl. This should minimize phytotoxic effects of free methomyl on cotton plants. If extremely high initial activity is desired it may be necessary to avoid the wash step in order to leave small amounts of unembedded methomyl in the particulate composition.

Another procedure involves spray-drying the above-mentioned methomyl-polymer solution. Such a procedure is advantageous where grinding is undesirable or uneconomical such as with some relatively soft or low melting polymers.

The preferred method for producing the particle is found in our United States Application Serial No. 892,396, filed March 31, 1978, the disclosure of which is incorporated herein by reference.

Briefly summarized, the invention in the latter application is as follows:

Initially, methomyl and a polymer are dissolved in one or more organic liquids.

The polymer must be water-insoluble, have low permeability to water and be capable of dissolving in an organic solvent, which solvent must also be utilized to dissolve the methomyl. The polymer should also have an inherent viscosity of at least about 0.2. The most preferred polymer is poly(methylmethacrylate). The preferred solvents are methylene chloride, trichloroethylene, ethylene dichloride, and perchloroethylene.

The solution is then co-mingled by any conventional high-shear method such as stirring in a Waring blender, colloid mill, or the like with a non-solvent (preferably hexane) or mixture of nonsolvents for the methomyl and polymer. Another procedure more suitable for continuous operation is to carry out the co-mingling continuously in a static high turbulance mixer such as a tee or bullet mixer. The solvent must be miscible with the non-solvent. Almost immediately, particles of polymer embedded with methomyl precipitate from the solution. The high-shear agitation is continued during the co-mingling of the non-solvent with the polymer-methomyl solution. The resulting precipitate is then washed to remove solvent and unembedded or free methomyl. The washing step is optional if one desires to have free methomyl for any reason. The particles are recovered by filtration or any other conventional means and dried.

The particles are irregular in shape and tend to be under about 300 microns in size in their longest dimension. Typically, at least about 90% of the particles are under 300 microns in their longest dimension and above 5 microns in their shortest.

The resulting particles may be applied with particular success to cotton plants wherein phytotoxicity is minimized. Also the initial activity of the controlled release methomyl is quite high. Residual activity of the methomyl-polymer compositions is superior to methomyl alone thereby reducing the number of applications needed to control insect infestation in e.g. cotton plants.

The following examples are illustrative of the instant invention. Unless otherwise indicated, all parts are by weight and all temperatures in °C.

## Example 1

A stirred solution of 16.4 g of methomyl and 40.0 g (Du Pont) Elvacite® 2010 poly(methylmethacrylate) with 100 ml of methylene chloride was treated dropwise with 92 ml of hexane. The stirred solution was added dropwise over a 10 minute period to a solution of 10 g of Emcol® 14 (Witco Chemical Company) surfactant in 500 ml of hexane at −20° and agitated at high speed (> 1,000 rpm) in a high shear Waring blender. The solid particles formed were allowed to settle, the liquid phase was decanted, and the resultant solid was agitated under high shear with 300 ml hexane at 0°, which removes the methylene chloride and hardens the particles. The particulate solid, all of which passed through a 60 mesh USS screen (approx. 250 $\mu$ mesh opening) was successively filtered off, dried on a suction funnel, washed with 1 liter of water containing a trace of sodium lauryl sulfate detergent, and dried in an air stream. The product contained about 20% methomyl determined by infrared analysis.

### Example 2

The process of Example 1 was carried out using high molecular weight Elvacite® 2041 poly(methylmethacrylate). The product contained 21% methomyl and was not quite as fine as that of Example 1.

### Example 3

The process of Example 1 was carried out using a polymer solution in which was dispersed 2.0 g of Cab—O—Sil® silica (Cabot Corporation), 8.0 g of Elvacite® 2010, 4.1 g methomyl and 100 ml of methylene chloride. The particulate product contained approximately 20% methomyl.

### Example 4

The process of Example 1 was carried out using polystyrene (Monsanto 314 — Natural) as the polymer. The product contained 18% methomyl.

### Example 5

The process of Example 1 was carried out using poly(ethylmethylmethacrylate) (Elvacite® 2042) as the polymer. The product contained 17% methomyl.

### Example 6

The process of Example 1 was carried out using a solution of 10.0 g of poly(vinyl acetate) (Polysciences Company) and 3.75 g of methomyl in 100 ml of methylene chloride in which was stirred 5.0 g Cab—O—Sil® synthetic silica. The product contained 11% methomyl.

### Example 7

The process of Example 1 was carried out using 5.0 g of poly(methylmethacrylate) (Elvacite® 2010), 5.0 g polystyrene (Monsanto 314-Natural) and 4.1 g of methomyl in a solution of 100 ml of methylene chloride and 50 ml of hexane. Emcol® 14 (5 g) was used in the cold hexane phase. The product contained 22% methomyl.

### Example 8

The process of Example 1 was carried out using 10.0 g Elvacite® 2010 and 15.0 g methomyl in a solution of 100 ml of methylene chloride and 50 ml of hexane. The product which contained about 30% methomyl was successively extracted with two 250 ml portions of water initially, again after 10 weeks and again similarly extracted after a total of 22 weeks of aging under ambient conditions. The final washing removed less than 0.01 g methomyl. Forced air drying was used after each washing. The final methomyl concentration was 20%.

### Example 9

The process of Example 1 was carried out using ethyl cellulose as polymer (Ethocel®, Dow Chemical Company) in 125 ml methylene chloride. The product contained 17% methomyl.

### Example 10

A solution of 1.0 g poly(methylmethacrylate) (Elvacite® 2010) and 1.5 g methomyl in 20 ml methylene chloride was stripped in a rotary evaporator at 30°. The solid product was ground to fine powder, sieved through a 50 mesh screen and then washed with about 250 ml of water and dried. Infrared analysis indicated the presence of about 30% methomyl embedded in the polymer.

### Example 11

The process of Example 10 was repeated using polystyrene (Monsanto 314-Natural) as the polymeric material. Approximately 29% methomyl was found in the product.

UTILITY

The particulate products of this invention are useful as insecticides and are applied as a dust or water dispersible powder. They are particularly useful for control of insects in cotton.

The cotton plant has many insect pests, each of which contributes to decreasing the yield of seed cotton that can be harvested. Some insects like aphids and plant bugs feed on the sap and retard plant growth. Others like the cotton leaf perforator, beet armyworm and looper, feed on the foliage and reduce the number of bolls that the plant can produce or mature. Still others, like budworms and bollworms, feed on the fruiting body late in the growing season and directly reduce or destroy the harvest. These latter pests are considered by many to be among the greatest insect pests of agriculture today.

4

Methomyl provides excellent control of a great many insect pests and is particularly effective on the budworm/bollworm complex. When applied directly to cotton, however, some of it is taken up by the cotton leaves and degraded. In a few days, recommended application rates have lost a portion of their effectiveness. Under certain growing conditions, the application of methomyl to most cotton varieties shows a reddening effect from even moderate application rates. Reddening is more likely to occur at high application rates and intensive spray schedules. Growers generally prefer their cotton to exhibit a dark-green appearance.

The particles of this invention greatly retard absorption of methomyl by plant foliage, yet provide a ready source to the insect cuticle or stomach. Hence, cotton plants are protected from insect damage with only a minimal opportunity to absorb methomyl. Reduced plant uptake leads to reduced degradation of methomyl and to protection from reddening of the cotton plants. The methomyl remains available on the plant for insect control for a significantly longer period of time. Use of the particles of this invention leads to improved insect control, reduced cotton reddening and improved residual insecticidal action. Less methomyl is required to achieve a given level of insect control with consequent economy and less dispersal of the insecticide into the biosphere.

The particles of this invention readily control pestiferous insects belonging to such orders as *Lepidoptera, Homoptera, Hemiptera, Diptera* and *Coleoptera*. More specifically, insects controlled by compositions of this invention include but are not limited to: cotton bollworm *(Heliothis zea)*, tobacco budworm *(Heliothis virescens)*, southern armyworm *(Spodoptera eridania)*, soybean looper *(Pseudoplusia includens)*, beet armyworm (Spodoptera exigua), cotton aphid *(Aphis glossypii)*, tarnished plant bug *(Lygus lineolaris)*, and white flies *(Trialeurodes* spp. and *Bemisia tabaci)*.

The insects are controlled by applying the particles in any convenient formulation to the locus of infestation, to the area to be protected, or to the pests themselves. For control of insects in agricultural crops, the particle is generally applied to the foliage or other plant parts that are infested or which are to be protected. Effective amounts to be applied depend on the species to be controlled, its life stage, its size and location, the amount of rainfall, the time of year, moisture, temperature, type of application, and other variables. In general, .0625 to 4 kg/ha of the active ingredient may be required for insect control in agriculture with rates of .125 to 2 kg/ha usually being sufficient. Preferred rates for controlling pests in cotton are in the range of .125 to 1 kg/ha.

The particles of this invention may be used as is or may be formulated in conventional ways as dusts, wettable powders, or the like. They may be admixed with carriers and/or surfactants. Suitable carriers are mineral materials such as clays, talcs, pyrophyllites, hydrous aluminosilicates, fine silicas, etc., and organic materials like finely divided wood or shell flours. Surfactants such as wetting agents, dispersing agents, antifoam agents and the like may be used alone or in combination, especially if application from an aqueous spray is intended.

Application of the pesticides to plants may be made dry or by spraying from an oil or water carrier. It is often desirable to use surfactants in the oil or water carrier to improve dispersion and wetting, and such surfactants can be added into the formulation or tank-mixed into the spray. Concentrated aqueous dispersions, containing up to 20% of the powders in the spray, or dilute dispersions containing as little as 80 ppm of powder, may be used.

The particles of this invention can be mixed with fungicides, bactericides, acaricides, nematicides, insecticides, or other biologically active compounds in order to achieve desired results with a minimum expenditure of time, effort and material. Amounts of these biologically active materials added for each part by weight of the compound of this invention may vary from about .05 to 25 parts by weight. Suitable agents of this type are well known to those skilled in the art. Some are listed below:

*Fungicides:*
methyl 2-benzimidazolecarbamate
tetramethyl thiuram disulfide (thiuram)
*n*-dodecylguanidine acetate (dodine)
manganese ethylenebisdithiocarbamate (maneb)
1,4-dichloro-2,5-dimethoxybenzene (chloroneb)
methyl 1-(butylcarbamoyl)-2-benzimidazolecarbamate (benomyl)
N-trichloromethylthiotetrahydrophthalimide (captan)
N-trichloromethylthiophthalimide (folpet)

*Bactericides:*
tribasic copper sulfate
streptomycin sulfate

*Acaricides:*
3,3-dimethyl acrylic acid, ester with 2-*sec*-butyl-4,6-dinitrophenol ("Morocide")
6-methyl-1,3-dithio[2,3-β]quinolin-2-one ("Morestan")
ethyl 4,4'-dichlorobenzilate (Chlorobenzilate®)
1,1-bis(*p*-chlorophenyl)-2,2,2-trichloroethane (Kelthane®)

5

**0 004 758**

bis(pentachloro-2,4-cyclopentadien-1-yl) (Pentac®)
tricyclohexyltin hydroxide (Plictran®)

*Nematicides:*
S-methyl 1-(dimethylcarbamoyl)-N-(methylcarbamoyloxy)thioformimidate (Vydate®)
S-methyl 1-carbamoyl-N-(methylcarbamoyloxy)thioformimidate
N-isopropylphosphoramidic acid, O-ethyl-O′-[4-(methylthio)-*m*-tolyl]diester ("Nemacur")

*Insecticides:*
3-hydroxy-N-methylcrotonamide(dimethylphosphate ester (Azodrin®)
methyl carbamic acid, ester with 2,3-dihydro-2,2-dimethyl-7-benzofuranol (Furadan®)
O-[2,4,5-trichloro-$\alpha$-(chloromethyl)benzyl]phosphoric acid, O′,O′-dimethyl ester (Gardona®)
2-mercaptosuccinic acid, diethyl ester, S-ester with thionophosphoric acid, dimethyl ester (Malathion®)
phosphorothioic acid, O,O-dimethyl, O-*p*-nitrophenyl ester (methyl parathion)
methylcarbamic acid ester with $\alpha$-naphthol (Sevin®)
methyl O-(methylcarbamoyl)thioacetohydroxamate (methamyl)
N′-(4-chloro-*o*-tolyl)-N,N-dimethylformamidine (Galecron®)
O,O-diethyl-O-(2-isopropyl-4-methyl-6-pyrimidylphosphorothioate (Diazinon®)
octachlorocamphene (toxaphene)
O-ethyl O-*p*-nitrophenyl phenylphosphonothioate (EPN)
cyano(3-phenoxyphenyl)-methyl-4-chloro-$\alpha$-(1-methylethyl)benzeneacetate (Pydrin®)
(3 - phenoxyphenyl)methyl($\pm$) - *cis,trans* - 3 - (2,2 - dichloroethenyl) - 2,2 - dimethylcyclopropanecarboxylate (Ambush®)
O-ethyl-S-(*p*-chlorophenyl)ethylphosphonodithioate (Curacron®)
phosphorothiolothionic acid, O-ethyl-O-[4-(methylthio)phenyl]-S-*n*-propyl ester (Bolstar®)

Experiment I

The foliage of Red Kidney bean plants in the two-leaf stage (8 days from planting) is sprayed to run off with dispersions of the preparations listed below. Dispersions are prepared by stirring appropriately weighed quantities of the powders in water containing sodium lauryl sulfate at 1:5000 and further diluting to 100 ml. After drying, leaves are excised and placed in covered 10-cm Petri dishes along with moist filter paper to keep them turgid. Ten southern armyworm larvae were placed in each dish. The test units are kept in a room maintained at 77° ± 2°F and 55 ± 5% R.H. Results are recorded at the end of two days and are listed below.

| Treatment | Spray Concentration (ppm) Active Ingredient | % Mortality (2 days) |
|---|---|---|
| Methomyl Control | 100 | 5 |
| Product of Example 1 (20% Active) | 100 | 100 |
| Product of Example 10 (30% Active) | 100 | 100 |
| Product of Example 11 | 100 | 100 |
| Untreated | — | — |

Experiment II

An experiment is performed that is similar in all respects to Experiment I except that the leaves are excised from the plants and fed to southern armyworm larvae at various intervals rather than immediately. Results are evaluated two days later.

| Treatment | Spray Concentration (ppm) Active Ingredient | % Mortality (days) | | | |
|---|---|---|---|---|---|
| | | 2 | 5 | 7 | 9 |
| Methomyl Control | 100 | 0—15 | 0 | 0 | 0 |
| Product of: Example 1 | 100 | 100 | — | 93 | 90 |
| | 50 | — | 90 | — | — |

6

0 004 758

| Treatment | Spray Concentration (ppm) Active Ingredient | % Mortality (days) | | | |
|---|---|---|---|---|---|
| | | 2 | 5 | 7 | 9 |
| Example 2 | 100 | 100 | 95 | — | — |
| Example 3 | 100 | 90 | — | — | — |
| Example 4 | 100 | 90 | — | — | — |
| Example 5 | 100 | 95 | — | 90 | — |
| Example 6 | 100 | 70 | — | — | — |
| Example 7 | 100 | 100 | — | — | — |
| Example 8 | 100 | 100 | — | 100 | — |
| | 50 | 100 | — | 100 | — |
| Example 9 | 100 | 80 | — | — | — |
| Example 10 | 100 | 100 | | | |
| Example 11 | 100 | 100 | | | |
| Untreated | — | 0 | | | |

Experiment III

Fifty ml portions of dispersions of the test material prepared by the procedure described in Experiment I are poured over 10 southern armywork larvae placed in a Buchner funnel (8 cm in diameter). The larvae are then transferred using forceps to Petri dishes containing moistened filter paper and an excised bean leaf for food. Results are read two days later.

| Treatment | Concentration (ppm) | % Mortality (2 days) |
|---|---|---|
| Product of Example 1 | 100 | 100 |
| Untreated | — | — |

Experiment IV

An experiment is performed that is similar in all respects to that described in Experiment I except that the excised leaves are fed to soybean loopers. Excellent control is obtained.

| Treatment | Spray Concentration (ppm) (Active Ingredient) | % Mortality (2 days) |
|---|---|---|
| Product of Example 1 | 200 | 100 |
| | 100 | 80 |

Experiment V

Potted cotton plants approximately 25 cm high having 3—4 true leaves are sprayed to run-off with aqueous dispersions of compositions of this invention at 500 ppm. The sprays contain sodium lauryl sulfate at a concentration of 1:5000. Another set of plants is similarly treated with methomyl. After drying, plants are set out in the greenhouse and held for observation.

7

**0 004 758**

| Treatment (500 ppm AI)[1] | Rating[2] | |
| --- | --- | --- |
| | 7 days | 8 days |
| Product of: | | |
| Example 1 | trace R | — |
| Example 2 | trace R | — |
| Example 4 | 0.5R | — |
| Example 5 | — | 0.2R |
| Example 6 | — | 0.2R |
| Example 10 | — | 0.2R |
| Methomyl Control | 3R | — |
| Untreated | 0 | — |

[1] AI = Active ingredient.
[2] R denotes typical methomyl effect, i.e., reddening of older leaves, slight puckering and black strippling of younger leaves. Rating is on the basis of 0—10, with 10 indicating total leaf area involvement.

## Claims

1. An insecticidal particulate composition comprising methomyl and a solid carrier characerised in that said composition is a free-flowing composition comprising 1—50% by weight of methomyl impregnated in 10—98% by weight of a water-insoluble polymer which is soluble in an organic solvent, has an inherent viscosity of at least 0.2 and is capable of releasing methomyl at a rate such that said composition exhibits an undiminished initial activity, an enhanced residual activity and reduced phytotoxic damage to cotton plants relative to solid methomyl.

2. The composition of claim 1 in which the polymer is poly(methylmethacrylate).

3. The composition of claim 1 in which the polymer is polystyrene.

4. The composition of claim 1 in which the polymer is ethyl cellulose.

5. The composition of claim 1 in which the polymer is poly(ethylmethacrylate).

6. The composition of claim 1 in which the polymer is poly(vinyl acetate).

7. A composition of any of claims 1—6 in which said polymer is diluted with 1—50% by weight of a diluent, based on the whole composition.

8. The composition of any of claims 1—7 in which the methomyl content is 10 to 40% by weight and the polymer content is 40—90% by weight.

9. The composition of any of claims 1—8 in which at least 90% of the particles are under 300 microns in their longest dimension.

10. The composition of any of claims 1—9 which has been washed to remove methomyl from the surface of the polymer particles.

11. The particulate composition of any of claims 1—10 in admixture with a surfactant and/or a solid or liquid carrier.

12. A method of making the composition of claim 1 which comprises comingling a solution of methomyl and said polymer in an organic solvent with a non-solvent for methomyl and said polymer, under conditions of high shear, and recovering free-flowing particles comprising methomyl and said polymer.

13. The method of claim 12 wherein said solvent is methylene chloride, trichloroethylene, ethylene chloride of perchloroethylene and said non-solvent is hexane.

14. The method of claim 12 or 13 wherein the particulate product is washed to remove methomyl from the surface of the polymer particles.

15. A method for controlling an insect pest by applying to the locus of said pest an effective amount of an insecticidal composition characterised in that said insecticidal composition is the composition of any of claims 1—11.

## Patentansprüche

1. Insektizide, teilchenförmige Zusammensetzung, enthaltend Methomyl und einen festen Träger, dadurch gekennzeichnet, dass die Zusammensetzung eine freifliessende Zusammensetzung ist, die

8

**0 004 758**

1—50 Gew.-% Methomyl, imprägniert in 10—98 Gew.-% eines wasserunlöslichen Polymeren, enthält, das in einem organischen Lösungsmittel löslich ist, eine inhärente Viskosität von mindestens 0,2 aufweist und geeignet ist, Methomyl in einer derartigen Rate freizusetzen, dass die Zusammensetzung eine unverringerte Anfangswirksamkeit, eine erhöhte Restwirksamkeit und eine verringerte phytotoxische Schädigung gegenüber Baumwollpflanzen, bezogen auf festes Methomyl, aufweist.

2. Zusammensetzung nach Anspruch 1, in der das Polymere Poly-(mehtylmethacrylat) ist.

3. Zusammensetzung nach Anspruch 1, in der das Polymere Polystyrol ist.

4. Zusammensetzung nach Anspruch 1, in der das Polymere Äthylcellulose ist.

5. Zusammensetzung nach Anspruch 1, in der das Polymere Poly-(äthylmethacrylat) ist.

6. Zusammensetzung nach Anspruch 1, in der das Polymere Poly-(vinylacetat) ist.

7. Zusammensetzung nach einem der Ansprüche 1 bis 6, in der das Polymere verdünnt ist mit 1—50 Gew.-% eines Verdünnungsmittels, basierend auf der gesamten Zusammensetzung.

8. Zusammensetzung nach einem der Ansprüche 1 bis 7, in der der Methomylgehalt 10—40 Gew.-% beträgt und der Polymergehalt 40—90 Gew.-% beträgt.

9. Zusammensetzung nach einem der Ansprüche 1 bis 8, in der mindestens 90% der Teilchen unter 300 Mikron in ihrer längsten Abmessung sind.

10. Zusammensetzung nach einem der Ansprüche 1 bis 9, die gewaschen wurde, um Methomyl von der Oberfläche der Polymerteilchen zu entfernen.

11. Teilchenförmige Zusammensetzung nach einem der Ansprüche 1 bis 10 im Gemisch mit einem oberflächenaktiven Mittel und/oder einem festen oder flüssigen Träger.

12. Verfahren zur Herstellung der Zusammensetzung nach Anspruch 1, bei dem eine Lösung von Methomyl und und dem genannten Polymeren in einem organischen Lösungsmittel mit einem Nichtlösungsmittel für Methomyl und das Polymere unter Bedingungen einer hohen Scherwirkung vermischt werden und freifliessende Teilchen, die Methomyl und das genannte Polymere enthalten, gewonnen werden.

13. Verfahren nach Anspruch 12, bei dem das Lösungsmittel Methylenchlorid, Trichloräthylen, Äthylenchlorid oder Perchloräthylen ist und das Nichtlösungsmittel Hexan ist.

14. Verfahren nach Anspruch 12 oder 13, bei dem das teilchenförmige Produkt zur Entfernung von Methomyl von der Oberfläche der Polymerteilchen gewaschen wird.

15. Verfahren zur Bekämpfung eines Insektenschädlings durch Anwendung auf den Ort dieses Schädlings von einer wirksamen Menge einer insektiziden Zusammensetzung, dadurch gekennzeichnet, dass die insektizide Zusammensetzung die Zusammensetzung gemäss einem der Ansprüche 1—11 ist.

**Revendications**

1. Composition insecticide en particules comprenant de méthomyl et un support solide, caractérisée en ce que cette composition est une composition s'écoulant librement comprenant 1 à 50% en poids de méthomyl imprégné dans 10 à 98% en poids d'un polymère insoluble dans l'eau qui est soluble dans un solvant organique, a une viscosité inhérente d'au moins 0,2 et est capable de libérer du méthomyl à une vitesse telle que cette composition présente une activité initiale non diminuée, une activité résiduelle accrue et une toxicité réduite pour le cotonnier, relativement au méthomyl solide.

2. Composition selon la revendication 1, dans laquelle le polymère est du poly(méthacrylate de méthyle).

3. Composition selon la revendication 1, dans laquelle le polymère est du polystyrène.

4. Composition selon la revendication 1, dans laquelle le polymère est de l'éthylcellulose.

5. Composition selon la revendication 1, dans laquelle le polymère est du poly(méthacrylate d'éthyle).

6. Composition selon la revendication 1, dans laquelle le polymère est du poly(acétate de vinyle).

7. Composition selon l'une quelconque des revendications 1 à 6, dans laquelle le polymère est dilué par 1 à 50% en poids d'un diluant, relativement à la composition totale.

8. Composition selon l'une quelconque des revendications 1 à 7, dans laquelle la teneur méthomyl est de 10 à 40% en poids et la teneur en polymère est de 40 à 90% en poids.

9. Composition selon l'une quelconque des revendications 1 à 8, dans laquelle au moins 90% des particules ont moins de 300 $\mu$m dans leur plus grande dimension.

10. Composition selon l'une quelconque des revendications 1 à 9, que l'on a lavée pour éliminer le méthomyl de la surface des particules de polymère.

11. Composition en particules selon l'une quelconque des revendications 1 à 10, en mélange avec un agent tensio-actif et/ou un véhicule solide ou liquide.

12. Procédé de fabrication de la composition selon la revendciation 1, qui consiste à mélanger ensemble une solution de méthomyl et dudit poymère dans un solvant organique avec un non-solvant du méthomyl et du polymère, dans des conditions de cisaillement élevée, et à récupérer des particules s'écoulant librement comprenant du méthomyl et dudit polymère.

13. Procédé selon la revendication 12, dans lequel le solvant est le chlorure de méthylène, le trichloro-éthylène, le chlorure d'éthylène ou le perchloro-éthylène, et le non-solvant est l'hexane.

9

14. Procédé selon la revendication 12 ou 13, dans lequel on lave le produit en particules pour éliminer le méthomyl de la surface des particules polymère.

15. Procédé pour lutter contre un insecte nuisible par application à son lieu d'infestation, d'une quantité efficace d'une composition insecticide, caractérisé en ce que la composition insecticide est la composition selon l'une quelconque des revendications 1 à 11.